# EUROPÄISCHE PATENTSCHRIFT

(11) **EP 4 230 023 B1**
(45) Veröffentlichungstag und Bekanntmachung des Hinweises auf die Patenterteilung: **27.11.2024**
(21) Anmeldenummer: 22157589.7
(22) Anmeldetag: 18.02.2022
(51) Int. Cl.: A01D 78/10

(54) **KREISELSCHWADER**
ROTARY RAKE
ANDAINEUSE ROTATIVE

(43) Veröffentlichungstag der Anmeldung: 23.08.2023
(73) Patentinhaber: SIP Strojna industrija d.d., 3311 Sempeter v Savinjski dolini (SI)
(72) Erfinder: BOGATAJ, Sebastjan, 3303 Gomilsko (SI); VOLK, Ziga, 3325 Sostanj (SI); OSTERVUH, Rok, 3325 Sostanj (SI)
(74) Vertreter: Puschmann Borchert Kaiser Klettner Patentanwälte Partnerschaft mbB

(56) Entgegenhaltungen:
- EP-A1- 3 430 884
- EP-B1- 1 829 444
- PL-B1- 226 222
- US-A- 3 896 613

## Beschreibung

Die vorliegende Erfindung betrifft einen Kreiselschwader zum Zusammenführen von auf einer Feld- oder Wiesenfläche liegendem Erntegut in der Art von Heu, Stroh oder Grüngut nach dem Oberbegriff des Patentanspruches 1.

Derartige Kreiselschwader sind hinreichend bekannt. Sie weisen einen sich im Wesentlichen in Fahrtrichtung erstreckenden Rahmen auf, der mit einem Fahrwerk am Boden abgestützt ist und der an einem vorderen Ende an eine Zug- und Antriebsmaschine ankoppelbar ist. Am Rahmen ist zumindest ein Kreiselrechen mittels eines Tragarms angelenkt. Der Tragarm ist um eine Tragarmschwenkachse schwenkbar am Rahmen gelagert und ist zusammen mit dem daran befestigten Kreiselrechen in eine Transportstellung anhebbar und in eine Arbeitsstellung absenkbar. Der Kreiselrechen kann üblicherweise über einen Antriebsstrang, der eine obenliegende Welle in Verbindung mit einem Getriebe aufweist und über eine Antriebswelle mit der Zug- und Antriebsmaschine verbunden ist, angetrieben werden.

Die EP 3 430 884 A1 beschreibt einen Kreiselschwader, der einen sich in Fahrt- und Arbeitsrichtung erstreckenden Rahmen umfasst, an dem eine frontseitige Kupplungsvorrichtung zum Ankuppeln an eine landwirtschaftliche Zug- und Antriebsmaschine und ein Fahrwerk zur Abstützung auf dem Boden vorgesehen ist. An jeder Rahmenseite ist wenigstens ein um eine vertikale Mittelachse umlaufend angetriebener Kreiselrechen angeordnet, der über einen längenveränderbaren Tragarm aus einer bodenparallelen Arbeitsstellung in eine annähernd vertikale Transportstellung und zurück überführbar ist. Die jeweiligen Tragarme sind am Rahmen um eine gegenüber einer horizontalen Ebene spitzwinklig geneigte Tragarmschwenkachse schwenkbar gelagert. Die Kreiselrechen sind über einen Antriebsstrang angetrieben, der eine Antriebsgelenkwellenanordnung, wenigstens ein Verteilergetriebe und eine sich vom Verteilergetriebe aus zu einem jeweiligen Kreiselrechen erstreckende Kreiselgelenkwelle aufweist. Der Antriebsstrang ist über eine mit einer Zug- und Antriebsmaschine verbundene Antriebsgelenkwelle angetrieben. Das Verteilergetriebe ist am Rahmen in einer Position oberhalb der Kreiselrechen mit einem Abstandsmaß von 30% bis 75% des Außendurchmessers des Kreiselrechens vor der Mittelachse des Kreiselrechens angebracht. Der Neigungswinkel der Tragarmschwenkachse ist auf einen Bereich von 5° bis 15° beschränkt. Eine beim Entlangführen der Kreiselrechen über Bodenunebenheiten der Feld- oder Wiesenfläche erforderliche Höhenänderung der Kreiselrechen gegenüber dem Fahrwerk des Kreiselschwaders ruft eine Längenänderung in einer Überdeckung von Schiebeprofilteilen der Kreiselgelenkwellen hervor. Der Neigungswinkel der Tragarmschwenkachse ist dabei so gestaltet, dass der Quotient aus der Längenänderung der Kreiselgelenkwelle und der Größe der erforderlichen Höhenänderung einen vorbestimmten Grenzwert nicht übersteigt.

Weitere Kreiselschwader sind bekannt aus PL 226 222 B1, EP 1 829 444 B1 und US 3 896 613 A.

Die Übertragung hoher Drehzahlen von der Zug- und Antriebsmaschine auf den Kreiselschwader verursacht Schwingungen, die einen hohen Verschleiß des Antriebsstrangs zur Folge haben können. Ferner ruft die beim Entlangführen der Kreiselrechen über den Bodenunebenheiten der Feld- oder Wiesenfläche erforderliche Höhenänderung der Kreiselrechen gegenüber dem Fahrwerk des Kreiselschwaders eine Längenänderung der Kreiselgelenkwellen hervor, die unter dem Einfluss von übertragenem Drehmoment vollzogen wird und sich negativ auf eine Bodenanpassung auswirkt.

Der Erfindung liegt die Aufgabe zugrunde, einen Kreiselschwader zu schaffen, der einen geringen Verschleiß des Antriebsstrangs sowie eine verbesserte Bodenanpassung aufweist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise weist ein Kreiselschwader einen sich in Fahrtrichtung erstreckenden Rahmen auf, der frontseitig über einen Anhängepunkt einer Verbindungseinrichtung, beispielsweise eine Bolzenkupplung, ein Hitchhaken, eine Kugelkopfkupplung oder dergleichen, mit einer landwirtschaftlichen Zug- und Antriebsmaschine koppelbar ist. Zudem weist der Rahmen ein Fahrwerk zur Abstützung auf dem Boden auf. Ferner sind ein erster Kreiselrechen und ein zweiter Kreiselrechen in Querrichtung beidseitig am Rahmen angeordnet, wobei eine Mittelachse des ersten Kreiselrechens in Längsrichtung des Rahmens zwischen dem Anhängepunkt und einer Mittelachse des zweiten Kreiselrechens angeordnet ist. Der erste Kreiselrechen ist über einen ersten Tragarm und der zweite Kreiselrechen ist über einen zweiten Tragarm schwenkbar am Rahmen gelagert, wobei zum Antreiben der Kreiselrechen diese jeweils mit einem Antriebsstrang in Wirkverbindung stehen.

Der Antriebsstrang ist über einen Zapfwellen-Anbindungspunkt mittels einer Antriebsgelenkwelle mit einem Abtrieb der Zug- und Antriebsmaschine verbindbar. Ausgehend vom Zapfwellen-Anbindungspunkt weist der Antriebsstrang eine Anbindungsgelenkwellenanordnung auf, die mit einem Verteilergetriebe verbunden ist. Der Antriebsstrang weist eine Verbindungsgelenkwelle auf, die ein erstes Verteilergetriebe mit einem zweiten Verteilergetriebe insbesondere ohne vertikalen Winkelversatz verbindet. Die Verteilergetriebe sind oberhalb der Kreiselrechen am Rahmen angebracht, wobei das erste Verteilergetriebe über eine erste Kreiselgelenkwelle mit dem ersten Kreiselrechen verbunden ist und das zweite Verteilergetriebe über eine zweite Kreiselgelenkwelle mit dem zweiten Kreiselrechen verbunden ist. Die Kreiselgelenkwellen sind längenveränderlich ausgebildet. Die Kreiselgelenkwellen können beispielsweise mit Schiebeprofilteilen ausgebildet sein, die mittels einer Veränderung in ihrer Überdeckung eine Längenveränderung der Kreiselgelenkwellen vollziehen. Das trägt zur Bodenanpassung der Kreiselrechen gegenüber dem Fahrwerk des Kreiselschwaders bei und ermöglicht, dass die Kreiselgelenkwellen eine Überführung der Kreiselrechen von einer nahezu vertikalen Transportstellung in eine annähernd horizontale Arbeitsstellung und umgekehrt erlauben. Dies trifft insbesondere bei längenveränderlichen Tragarmen zur Anpassung der Arbeitsbreite zu.

Erfindungsgemäß ist das zweite Verteilergetriebe in Längsrichtung des Rahmens zwischen dem Anhängepunkt und dem ersten Verteilergetriebe angeordnet und der Zapfwellen-Anbindungspunkt ist über eine Anbindungsgelenkwellenanordnung mit dem zweiten Verteilergetriebe verbunden. Das zweite Verteilergetriebe, welches dem hinteren zweiten Kreiselrechen zugeordnet ist, ist in Längsrichtung des Rahmens zwischen dem Anhängepunkt und dem ersten Verteilergetriebe angeordnet, das dem vorderen, ersten Kreiselrechen zugeordnet ist. Mit anderen Worten ist damit das erste Verteilergetriebe, das dem vorderen Kreiselrechen zugeordnet ist, in Fahrt- und Längsrichtung des Rahmens hinter dem zweiten Verteilergetriebe angeordnet, das dem hinteren, zweiten Kreiselrechen zugeordnet ist. Das erste Verteilergetriebe kann somit als hinteres Verteilergetriebe und das zweite Verteilergetriebe somit als vorderes Verteilergetriebe betrachtet werden.

Die Anbindungsgelenkwellenanordnung des Antriebsstrangs ist antriebseitig über den Zapfwellen-Anbindungspunkt mit der Antriebsgelenkwelle verbunden und abtriebseitig mit dem vorderen, zweiten Verteilergetriebe. Die Anbindungsgelenkwellenanordnung hat die Aufgabe, ein Drehmoment von der Antriebsgelenkwelle an das zweite Verteilergetriebe zu übertragen.

Durch die erfindungsgemäße Anordnung der Verteilergetriebe bietet der Rahmen in Längsrichtung betrachtet hinter dem vorderen Verteilergetriebe, über das der hintere Kreiselrechen angetrieben wird, einen großen Spiel- bzw. Freiraum zur Anbindung des hinteren Verteilergetriebes, über welches der vordere Kreiselrechen angetrieben wird. Dadurch geht eine Positionierung des vorderen sowie des hinteren Verteilergetriebes mit einer großen Flexibilität einher.

Das ermöglicht einen großen Abstand zwischen dem Anhängepunkt und dem vorderen Verteilergetriebe, so dass sich ein großes Platzangebot für die Anbindungsgelenkwellenanordnung zwischen dem Anhängepunkt und dem vorderen Verteilergetriebe ergibt.

Das hat den Effekt, dass der Zapfwellen-Anbindungspunkt nahezu auf die gleiche Höhe einer Zapfwelle der Zug- und Antriebsmaschine eingestellt werden kann und dennoch eine Steigung zwischen dem Zapfwellen-Anbindungspunkt und dem vorderen Verteilergetriebe gering ausfallen kann, wobei dennoch der Abstand zwischen dem Anhängepunkt und dem vorderen Ende des Kreiselrechens kurz sein kann. Dadurch weist der mit der Antriebsgelenkwelle verbundene, frontseitige Antriebsstrang, d.h. die Anbindungsgelenkwellenanordnung, in vorteilhafter Weise einen geringen Verschleiß bei möglichst kompakter Bauweise des frontseitigen Rahmens auf.

Ausgehend von den jeweiligen Verteilergetrieben erstrecken sich die erste Kreiselgelenkwelle und die zweite Kreiselgelenkwelle in schräg zum Rahmen verlaufender Verbindung zu den ihnen zugeordneten Kreiselrechen. In Längsrichtung des Rahmens gesehen, ist das erste, hintere Verteilergetriebe in Längsrichtung deutlich hinter dem ersten Kreiselrechen angeordnet. So erstreckt sich die erste Kreiselgelenkwelle von hinten nach vorne. Die zweite Kreiselgelenkwelle wird von dem zweiten, vorderen Verteilergetriebe, das in Längsrichtung deutlich vor dem zweiten Kreiselrechen angeordnet ist, an diesen herangeführt.

Die Kreiselgelenkwellen schließen in einer horizontalen, bodenparallelen Ebene sowie in einer vertikalen Längsebene des Rahmens einen spitzen Winkel mit dem Rahmen ein, wobei der Winkel sehr gering ausfallen kann. Daraus ergibt sich, dass eine Höhenänderung der Kreiselrechen nur eine geringe Längenänderung der Kreiselgelenkwellen erfordert. Das verbessert zum einen die Bodenanpassung der Kreiselrechen an Bodenunebenheiten der Feld- oder Wiesenfläche, da die dafür erforderliche Höhenänderung der Kreiselrechen gegenüber dem Fahrwerk des Kreiselschwaders mit einer Längenänderung der Kreiselgelenkwellen einhergeht.

Die geringere notwendige Längenänderung der Kreiselgelenkwellen kommt insbesondere bei längenveränderlichen Tragarmen zum Tragen, wenn die Tragarm-Ausdehnung in der Transportstellung geringer ist als in der Arbeitsstellung. Eine Überführung der Kreiselrechen von einer nahezu vertikalen Transportstellung, bei der eine Länge der Tragarme aufgrund der geringen zulässigen Transporthöhe nur sehr kurz sein soll, in eine Arbeitsstellung, bei der die Tragarme und somit die Kreiselrechen in Querrichtung des Rahmens eine breitere Ausladung aufweisen, geht damit nur mit einer geringen Längenveränderung der Kreiselgelenkwellen einher.

Der Abstand zwischen dem Verteilergetriebe und dem jeweils mit ihm über eine Kreiselgelenkwelle verbundenen Kreiselrechen ermöglicht, dass die jeweilige Kreiselgelenkwelle eine große Längenveränderung aufweisen kann, welche die notwendige Längenveränderung beim Überführen des Kreiselrechens von der Arbeitsstellung in die Transportstellung und umgekehrt übersteigt. So können die Kreiselgelenkwellen in der Transportstellung bei einer Maximalüberdeckung der Schiebeprofilteile eine möglichst geringe Länge aufweisen, um eine Höhe des Kreiselschwaders gering zu halten. Bei der Überführung von der Transportstellung in die Arbeitsstellung ist die notwendige Längenänderung der Kreiselgelenkwellen durch den spitzen Winkel gegenüber dem Rahmen gering gehalten. So ist beispielsweise die eigentliche Veränderung in der Überdeckung der Schiebeprofilteile deutlich geringer als eine größtmögliche Auszugslänge der Schiebeprofilteile, die eine notwendige Mindestüberdeckung von insbesondere 8 % bis 10 % aufweisen.

Vorzugsweise sind der erste Tragarm und der zweite Tragarm längenveränderlich ausgebildet. Die Tragarme können beispielsweise teleskopierbar und/oder mit zusätzlichen Schwenkachsen ausgebildet sein, um eine große Rechbreite bzw. Arbeitsbreite des Kreiselschwaders zu erzielen. Die Tragarme können z.B. jeweils ein erstes Element und ein zweites Element umfassen, wobei das erste Element schwenkbar am Rahmen gelagert ist, um den jeweiligen Tragarm zwischen der Arbeitsstellung und der Transportstellung bewegen zu können, in welcher der Kreiselschwader eine kompakte, zusammengeklappte Konfiguration aufweist. Das erste Element kann schwenkbar oder teleskopierbar mit dem zweiten Element, an dem der Kreiselrechen angelenkt ist, verbunden sein, so dass in der abgesenkten Arbeitsstellung eine Arbeitsbreite des Kreiselschwaders durch Ausfahren der Tragarme veränderbar ist und beispielsweise auf eine maximale Arbeitsbreite vergrößert werden kann. Dadurch können große Arbeitsbreiten bei einem geringen Transportmaß erreicht werden.

Durch den großen Längsabstand zwischen den Kreiselrechen und den ihnen zugeordneten Verteilergetrieben ergibt sich in der Horizontalebene ein geringer spitzer Winkel zwischen dem Rahmen und der jeweiligen Kreiselgelenkwelle.

Dies ermöglicht den Einsatz einer Kreiselgelenkwelle, deren Längenänderung über die notwendige Längenänderung der Kreiselgelenkwelle beim Verschwenken des jeweiligen Tragarms von der Transportstellung in die Arbeitsstellung hinaus geht.

Es ist eine derart große Längenveränderung der Kreiselgelenkwellen ermöglicht, dass sie in der abgesenkten Arbeitsstellung des jeweiligen Kreiselrechens bei maximal ausgefahrenem Tragarm eine zuverlässige Bodenanpassung des Kreiselrechens ermöglichen. So bietet die Kreiselgelenkwelle auch in einer Senke ausreichend Puffer, um nicht auseinanderzufallen.

So kann eine ausreichende Längenveränderung der Kreiselgelenkwellen bereitgestellt werden.

Dadurch können bevorzugt die Tragarmschwenkachsen insbesondere horizontal in Längsrichtung des Rahmens ausgerichtet sein.

Erfindungsgemäß kann so eine zuverlässige Arbeitsweise auch mit einer horizontal liegenden Tragarmschwenkachse, auf baulich einfache Weise, realisiert werden.

Zudem sind bevorzugt die Tragarmschwenkachsen auf der gleichen vertikalen Höhe wie die Verbindungsgelenkwelle angeordnet. So liegen die Gelenkwellen und die Tragarme im Wesentlichen in derselben Schwenkebene.

Gemäß einer bevorzugten Ausführungsform liegt der Zapfwellen-Anbindungspunkt in Längsrichtung des Rahmens hinter dem Anhängepunkt und ist horizontal beabstandet zum nächstliegenden Verteilergetriebe angeordnet, wobei der Horizontalabstand größer ist als der Radius des ersten Kreiselrechens. Ferner ist der Zapfwellen-Anbindungspunkt in vertikaler Richtung über dem Anhängepunkt angeordnet und weist einen Höhenversatz zum nächstliegenden Verteilergetriebe auf, wodurch eine Steigung eingestellt ist.

Aufgrund des Höhenversatzes zwischen dem Zapfwellen-Anbindungspunkt und dem nächstliegenden zweiten Verteilergetriebe findet eine Drehmomentübertragung über die Anbindungsgelenkwellenanordnung unter Überwindung eines Winkelversatzes statt, der einer Mindeststeigung entspricht. Diese Mindeststeigung ist durch den Quotienten des Höhenversatzes zwischen dem Zapfwellen-Anbindungspunkt und dem vorderen bzw. zweiten Verteilergetriebe zum Horizontalabstand zwischen dem Zapfwellen-Anbindungspunkt und dem nächstliegenden Verteilergetriebe bestimmt.

Durch den großen Abstand zwischen dem Zapfwellen-Anbindungspunkt und dem nächstliegenden zweiten Verteilergetriebe ergibt sich, dass die Steigung, und somit der Winkelversatz der Anbindungsgelenkwellenanordnung, in einem großen Bereich wählbar ist. Der Winkelversatz soll möglichst gering sein und keinesfalls 25° übersteigen, da dies mit einem erheblichen Verschleiß der Anbindungsgelenkwellenanordnung einhergehen würde. Der sich aus der Mindeststeigung ergebende Mindestwinkel liegt erfindungsgemäß sogar nur zwischen 5° und 15°, insbesondere bei etwa 10°.

In der erfindungsgemäßen Anordnung ergibt sich eine Begrenzung eines Übertragungswinkels der Anbindungsgelenkwellenanordnung nach unten somit nicht durch die Lage des nächsten Verteilergetriebes, sondern höchstens durch eine notwendige Durchgangshöhe am Rahmen am vorderen Ende des vorderen Kreiselrechens.

Der Abstand zwischen dem Verteilergetriebe und dem ihm zugeordneten Kreiselrechen kann daher in der erfindungsgemäßen Anordnung vergrößert werden, ohne dass dies eine signifikante Auswirkung auf den Mindestwinkel der Anbindungsgelenkwellenanordnung hat. So kann auch bei einem großen Abstand bzw. einem geringen Winkel zwischen Kreiselgelenkwelle und Rahmen ein Übertragungswinkel der Anbindungsgelenkwellenanordnung von insbesondere weniger als 23° realisiert werden und dennoch der Zapfwellen-Anbindungspunkt in etwa auf der Höhe der Zapfwelle der Zugmaschine liegen.

Dies führt dazu, dass der Verschleiß im Antriebssystem gering gehalten wird, da zum einen der Übertragungswinkel gering ist und zum anderen die Antriebsgelenkwelle, die die Zapfwelle des Traktors mit dem Zapfwellenanbindungspunkt verbindet, nur in einer Ebene, nämlich im Wesentlichen in der Horizontalebene, verschwenkt wird. Dadurch wird der Gesamtbewegungswinkel der Antriebsgelenkwelle reduziert und große Winkeländerungen treten nur kurzzeitig in der Kurvenfahrt oder beim Wenden auf. Dadurch kann der Verschleiß der Antriebsgelenkwelle reduziert werden und gegebenenfalls kann sogar auf eine Weitwinkel-Gelenkwelle als Antriebsgelenkwelle verzichtet und eine einfache Gelenkwelle verwendet werden.

Mit anderen Worten bestimmt so bei gleichbleibendem Abstand zwischen dem Anhängepunkt bzw. Zapfwellen-Anbindungspunkt und dem vorderen Ende des vorderen Kreiselrechens lediglich die Durchgangshöhe die Mindeststeigung der Anbindungsgelenkwellenanordnung und dies unabhängig vom Abstand der Kreiselgelenkwellen von den Mittelachsen der ihnen zugeordneten Kreiselrechen.

So ergibt sich eine große Flexibilität in der Positionierung der Kreiselgelenkwellen, ohne dass dies eine Auswirkung auf die Gestaltung des vorderen Teils des Rahmens hat. Eine Anpassung der Höhe des Zapfwellen-Anbindungspunkts oder eine Vergrößerung des Abstands zwischen Aufhängepunkt und vorderem Ende des vorderen Kreiselrechens muss daher nicht vorgenommen werden.

Bevorzugt ist das zweite Verteilergetriebe in Längsrichtung des Rahmens zwischen den Mittelachsen des ersten Kreiselrechens und des zweiten Kreiselrechens angeordnet.

Da das zweite Verteilergetriebe hinter der Mittelachse des ersten Kreiselrechens, insbesondere hinter dem ersten Tragarm angeordnet ist, weist der erfindungsgemäße Kreiselschwader zwischen dem Zapfwellen-Anbindungspunkt und dem vorderen Verteilergetriebe einen großen Abstand und somit eine geringe Mindeststeigung auf. Die geringe Mindeststeigung hat einen geringen Mindestwinkelversatz der Anbindungsgelenkwellenanordnung zur Folge. Dadurch kann der Antriebsstrang verschleißarm gestaltet werden.

Gemäß einer bevorzugten Ausführungsform ist das erste Verteilergetriebe in Längsrichtung des Rahmens zwischen den jeweiligen Mittelachsen des ersten Kreiselrechens und des zweiten Kreiselrechens angeordnet. Die Mittelachse des ersten Kreiselrechens und die Mittelachse des zweiten Kreiselrechens sind über einen Mittelachsenabstand beabstandet zueinander angeordnet. Das erste Verteilergetriebe und das zweite Verteilergetriebe sind maximal über den Mittelachsenabstand beabstandet zueinander angeordnet. Dadurch kann der Rahmen in kompakter Bauweise geringfügig länger als der Mittelachsenabstand gebaut sein, wodurch der Kreiselschwader in Kurvenfahrten wendig ist und der Spur der Zug- und Antriebsmaschine sehr genau folgt. Dabei ist es wichtig, dass der Rahmen ohne Kollisionsgefahr der Zug- und Antriebsmaschine in Kurvenfahrten folgen kann.

Insbesondere kann der Rahmen zwischen dem Anhängepunkt und dem ersten Kreiselrechen eine Länge von etwa 50% bis 75% des Kreiselrechendurchmessers, insbesondere 1,5 m bis 1,6 m aufweisen. Dies entspricht in etwa dem Mindestabstand, bei dem das Wenden mit herkömmlichen Zugmaschinen noch zuverlässig kollisionsfrei möglich ist. Durch die erfindungsgemäße Anordnung muss dieser Mindestabstand, auch bei einem großen Abstand zwischen den Verteilergetrieben und den Mittelachsen der ihnen zugeordneten Kreiselrechen, insbesondere von mehr als 50% des Kreiseldurchmessers, nicht überschritten werden.

Vorzugsweise sind die jeweiligen Mittelachsen über eine Ausdehnung, die 1- bis 1,5-mal die Länge des Radius des ersten Kreiselrechens beträgt, beabstandet zueinander angeordnet. In dieser Ausführungsform weist der Mittelachsenabstand eine geringe Ausdehnung auf. Dadurch kann der Rahmen in vorteilhafter Weise eine besonders kompakte Bauweise aufweisen.

Gemäß einer bevorzugten Ausführungsform sind das erste Verteilergetriebe sowie das zweite Verteilergetriebe jeweils mit einer Ausdehnung, die 50% bis 75% des Außendurchmessers des ersten Kreiselrechens beträgt, beabstandet zur Mittelachse der jeweils mit ihnen in Wirkverbindung stehenden Kreiselrechen angeordnet. Bei dieser Anordnung der jeweiligen Verteilergetriebe können die längenveränderbaren Kreiselgelenkwellen einerseits die für die Transportstellung notwendige Kürze und andererseits die für die Arbeitsstellung, insbesondere bei maximal ausgefahrenem Tragarm, notwendige Länge aufweisen.

Durch die oben genannte Anordnung der jeweiligen Verteilergetriebe fällt der in horizontaler bzw. bodenparalleler Ebene sowie in vertikaler Längsebene des Rahmens gebildete spitze Winkel zwischen der jeweiligen Kreiselgelenkwelle und dem Rahmen in der Arbeitsstellung sowohl bei nicht ausgefahrenem Tragarm als auch bei maximal ausgefahrenem Tragarm gering aus. Je geringer der spitze Winkel, insbesondere der spitze Winkel in horizontaler Ebene, desto geringer ist in der Arbeitsstellung des Kreiselrechens die erforderliche Längenänderung der jeweiligen Kreiselgelenkwelle, um beim Entlangführen des Kreiselrechens über den Bodenunebenheiten der Feld- oder Wiesenfläche eine erforderliche Höhenänderung des Kreiselrechens gegenüber dem Fahrwerk des Kreiselschwaders auszugleichen, insbesondere bei ausgefahrenem Tragarm. Mit anderen Worten ist die Bodenanpassung der Kreiselrechen verbessert, da eine Längenänderung der Kreiselgelenkwellen, die insbesondere durch eine Längenänderung in der Überdeckung von Schiebeprofilteilen hervorgerufen ist, unter dem Einfluss von übertragenem Drehmoment vollzogen wird, woraus sich Reibungskräfte zwischen den Schiebeprofilteilen ergeben. Das hat zur Folge, dass aufgrund eines kürzeren Auszugwegs der Kreiselgelenkwelle im Rahmen der Bodenanpassung der Verschleiß reduziert wird.

Gemäß einer bevorzugten Ausführungsform ist die Anbindungsgelenkwellenanordnung durch eine im wesentlichen einteilige Anbindungsgelenkwelle ausgebildet. Die einteilige Anbindungsgelenkwelle überbrückt eine große Einbaulänge zwischen dem Zapfwellen-Anbindungspunkt und dem zweiten Verteilergetriebe, wobei die Anbindung mit einem geringen Übertragungswinkel einhergeht.

Vorzugsweise weist die Anbindungsgelenkwellenanordnung eine zweiteilige Anordnung auf, wobei ein erstes Gelenkwellenteil den Zapfenwellen-Anbindungspunkt bildet und ein mit dem ersten Gelenkwellenteil verbundenes zweites Gelenkwellenteil umfasst, das mit dem zweiten Verteilergetriebe verbunden ist.

Das erste Gelenkwellenteil und das zweite Gelenkwellenteil sind insbesondere über ein einfaches kardanisches Gelenk verbunden und schließen einen Arbeitswinkel ein.

In vorteilhafter Weise ermöglicht die zweiteilige Anbindungsgelenkwellenanordnung, dass sich die Steigung zwischen dem Zapfwellen-Anbindungspunkt und dem zweiten Verteilergetriebe über eine geringe horizontale Längsausdehnung erstrecken kann. Dadurch kann die Durchgangshöhe des ersten Kreiselrechens schnell, d.h. über eine kurze horizontale Ausdehnung in Längsrichtung des Rahmens, lediglich über einen Anstieg des ersten Gelenkwellenteils überwunden werden. Das zweite Gelenkwellenteil ist insbesondere ohne Winkelversatz mit dem zweiten Verteilergetriebe verbunden.

Das erste Gelenkwellenteil bildet einen Übertragungswinkel von etwa 20°. Es erreicht die Höhe der Verteilergetriebe in einem Knickpunkt. Die Verteilergetriebe besitzen jeweils einen Anschlussabstand, der als Abstand zwischen der Gelenkachse des Getriebeeingangs und der Mitte des Verteilergetriebes definiert ist. Die Mitte des Verteilergetriebes liegt in etwa im Schnittpunkt der Getriebeeingangs-Mittelachse und der Mittelachse des Getriebeausgangs, an dem die Kreiselgelenkwelle angebunden ist.

Erfindungsgemäß ist in Längsrichtung gesehen, der Abstand des Knickpunkts von der Mittelachse des vorderen Kreiselrechens abzüglich des Anschlussabstands des ersten Verteilergetriebes geringer als der Abstand der Getriebemitte des ersten Verteilergetriebes von der Mittelachse des ersten Kreiselrechens.

Dadurch liegt bei gleichem Übertragungswinkel ein größerer Abstand zwischen der Mitte des Verteilergetriebes und der Mittelachse des Kreiselrechens vor als dies der Fall wäre, wenn das Verteilergetriebe unmittelbar an das erste Gelenkwellenteil anschließen würde.

So kann bei der erfindungsgemäßen Anordnung gegenüber der bekannten Anordnung entweder bei gleichem Abstand zwischen der Mitte des Verteilergetriebes und der Kreiselachse ein geringerer Übertragungswinkel realisiert werden und damit der Verschleiß reduziert werden, oder bei gleichem Übertragungswinkel ein größerer Abstand, was zu einer Verbesserung im Hinblick auf den Längenausgleich der Kreiselgelenkwellen führt.

Gemäß einer noch bevorzugteren Ausgestaltung ist der Getriebemittelpunkt des ersten Verteilergetriebes weiter von der Mittelachse des ersten Verteilergetriebes beabstandet als der Knickpunkt.

Zusammen mit der Antriebsgelenkwelle, die bevorzugt achsparallel angeordnet ist, und dem in der Anbindungsgelenkwellenanordnung eingeschlossenen Übertragungswinkel, ist eine Z-Anbindung des Antriebsstrangs mit der Zug- und Antriebsmaschine realisiert. Mit anderen Worten bewegt sich das zweite Gelenkwellenteil annähernd in einer horizontalen, bodenparallelen Ebene. Die Z-Anbindung des Kreiselschwaders weist im frontseitigen Antriebsstrang annähernd gleiche räumliche Arbeitswinkel auf, insbesondere 20°, so dass eine Gleichförmigkeit in der Übertragung von Drehbewegung vorliegt und ausgeprägte Geschwindigkeitsschwankungen in der Übertragung vermieden oder verhindert sind. Dadurch ist es in vorteilhafter Weise möglich, eine wartungsarme Standardgelenkwelle / Einfachgelenkwelle mit einfachen Gelenken in die Antriebsgelenkwellenanordnung einzusetzen, im Vergleich zu einer wartungsintensiven Weitwinkelgelenkwelle.

Die Wahl des geeigneten Wellengelenks hängt von der Größe des Arbeitswinkels zwischen versetzt zueinander angeordneten Achsen und der damit verbundenen Drehzahl ab. Je größer der Winkel ist, desto höher ist die Drehzahlschwankung. Eine wartungsarme Standardgelenkwelle wird bevorzugt bei gleichmäßig übertragenen Drehbewegungen eingesetzt, d.h. die Standardgelenkwelle ist bevorzugt achsparallel angeordnet und bewegt sich in der horizontalen Ebene und ihre jeweiligen Gelenke weisen gleiche Arbeitswinkel auf. Im gleichmäßigen Dauerbetrieb kann eine Standardgelenkwelle auf der Seite der Zug- und Antriebsmaschine sowie auf der Seite der Arbeitsmaschine jeweils ein Gelenk mit einem Arbeitswinkel aufweisen, der bis zu 25° beträgt, wobei die Winkel der jeweiligen Gelenke bis zu 7° variieren können. Schon kleine Unterschiede zwischen den Arbeitswinkeln der Gelenke, insbesondere mehr als 7°, können die Gelenke durch ungleiche Übertragung von Drehbewegungen vorzeitig erheblich beschädigen oder zerstören. Kurzzeitige Arbeitswinkel zwischen 25° und 40°, beispielsweise bei Kurvenfahrten, sind bei reduzierter Übertragung von Drehbewegungen möglich, beispielsweise 40% der Nennleistung, ohne erhebliche Schäden zu verursachen.

Um große Schwankungen bei der Übertragung von Drehbewegungen zu vermeiden, können als Antriebsgelenkwelle wartungsintensivere Weitwinkelgelenkwellen eingesetzt werden. Diese können beispielsweise bei einem maximalen Arbeitswinkel von 25° höhere Leistungen übertragen. Wenn beispielsweise zwischen der Zug- und Antriebsmaschine und dem Kreiselschwader eine Antriebsgelenkwelle mit Weitwinkel-Gleichlaufgelenk und einfachem Gelenk eingebaut ist, kann im Dauerbetrieb eine Ungleichförmigkeit der Bewegung verhindert werden, indem eine Winkeldifferenz von 16° bei 540 min⁻¹ und/oder 9° bei 1.000 min⁻¹ nicht überschritten wird. Kurzzeitig, beispielsweise bei Kurvenfahrten, können Weitwinkelgelenkwellen je nach Gelenktyp eine Winkelbeweglichkeit zwischen 50° und 80°ermöglichen, ohne Drehschwingungen zu erzeugen.

Ferner ist zusammen mit dem in der Anbindungsgelenkwellenanordnung eingeschlossenen Arbeitswinkel eine Z-Anbindung mit der Antriebsgelenkwelle realisiert, wobei die Antriebsgelenkwelle eine annähernd bodenparallele Anordnung während des Betriebs beibehält. Sie verbindet die Zug- und Antriebsmaschine mit dem Kreiselschwader nahezu ohne einen vertikalen Winkel, so dass die räumlichen Arbeitswinkel zwischen der Antriebsgelenkwelle, dem ersten Gelenkwellenteil und dem zweiten Gelenkwellenteil annähernd gleich sind. Auf diese Weise sind ausgeprägte Geschwindigkeitsschwankungen zwischen der Antriebsgelenkwelle und dem zweiten Gelenkwellenteil verhindert und die Gleichförmigkeit in der Übertragung der Drehbewegung ist verbessert. Dadurch kann in vorteilhafter Weise eine Standardgelenkwelle als Antriebsgelenkwelle eingesetzt sein, die im Vergleich zu einer bei größeren Arbeitswinkeln eingesetzte Weitwinkelgelenkwelle mit einem erheblich geringeren Wartungsaufwand einher geht.

Bevorzugt kann das erste Gelenkwellenteil über einen ersten Lagerpunkt am Rahmen gelagert sein. Das der Zugmaschine zugewandte Ende des ersten Gelenkwellenteils bildet den Zapfwellen-Anbindungspunkt, an dem eine Antriebsgelenkwelle zur Verbindung mit der Zapfwelle der Zugmaschine angeschlossen werden kann.

Vorzugsweise ist das zweite Gelenkwellenteil zwischen dem Zapfenwellen-Anbindungspunkt und der Mittelachse des ersten Kreiselrechens über einen zweiten Lagerpunkt am Rahmen gelagert. Das erste Gelenkwellenteil und das zweite Gelenkwellenteil schließen einen Winkel ein, insbesondere einen festen Winkel.

Vorzugsweise ist der Knickpunkt in Längsrichtung des Rahmens um einen Knickpunkt-Abstand zur Mittelachse des ersten Kreiselrechens beabstandet, wobei der Knickpunkt-Abstand annähernd der Länge des Radius des ersten Kreiselrechens entspricht. Dadurch kann die Durchgangshöhe des ersten Kreiselrechens schnell, d.h. mit geringer Ausdehnung in Längsrichtung des Rahmens, lediglich über einen Anstieg des ersten Gelenkwellenteils überwunden werden. Die Lage des Knickpunkts beeinflusst eine Länge des ersten Gelenkwellenteils und des zweiten Gelenkwellenteils. Je geringer der Knickpunkt-Abstand ausfällt, desto länger ist das erste Gelenkwellenteil und desto geringer ist sein Übertragungswinkel bei gleichbleibender Länge des Rahmens.

Gemäß einer bevorzugten Ausführungsform können der erste Kreiselrechen und der zweite Kreiselrechen gegenläufig angetrieben sein, wobei der zweite Kreiselrechen insbesondere ein Getriebe aufweist. Das Getriebe ist über die zweite Kreiselgelenkwelle mit dem Antriebsstrang verbunden und kann das Drehmoment, die Leistung und die Drehrichtung des zweiten Kreiselrechens anpassen. Durch die gegenläufige Drehrichtung und Bewegung der Kreiselrechen können in Abhängigkeit der auf dem Boden liegenden Erntegutmenge der erste Kreiselrechen und der zweite Kreiselrechen beispielsweise bei großen Erntegutmengen jeweils einen Erntegutschwad ablegen oder bei geringeren Erntegutmengen einen einzelnen Mittelschwad ablegen. Dadurch ist eine große Flächenleistung ermöglicht.

Vorzugsweise sind der erste Kreiselrechen und der zweite Kreiselrechen gleichläufig angetrieben. Dadurch kann der in Fahrtrichtung vordere, erste Kreiselrechen das Erntegut dem nachfolgenden zweiten Kreiselrechen zurechen, um beispielsweise einen einzigen Seitenschwad abzulegen.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Seitenansicht eines erfindungsgemäßen Kreiselschwaders in der Arbeitsstellung;
- Fig. 2: eine Draufsicht auf den Kreiselschwader von oben gemäß Fig. 1;
- Fig. 3a: eine Seitenansicht der Antriebsstrangs, und
- Fig. 3b: eine Draufsicht auf den Antriebsstrang.

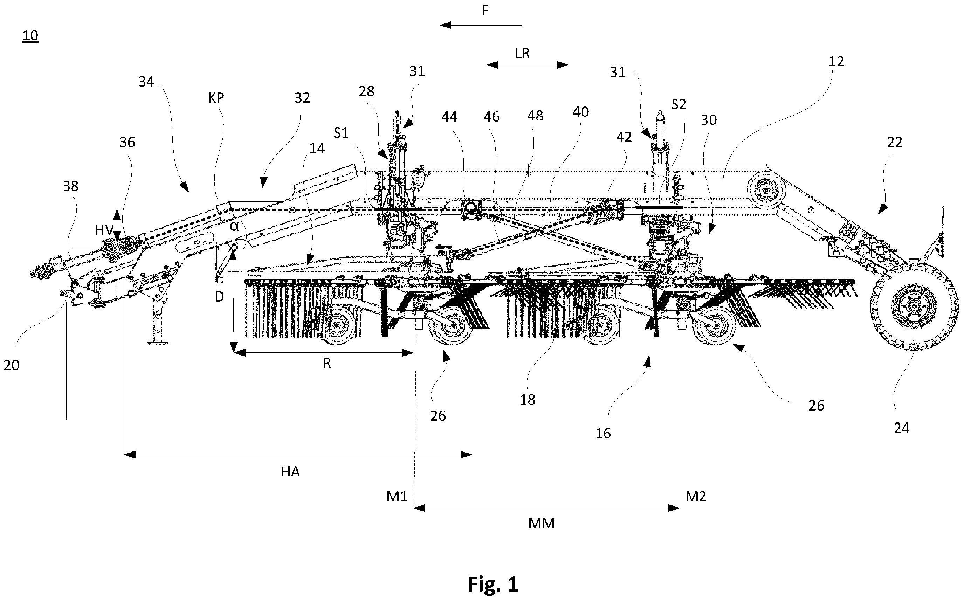

In Fig. 1 ist ein Kreiselschwader 10 zum Schwaden von auf einer Feld- oder Wiesenfläche liegendem Erntegut, wie Heu, Stroh oder Grüngut, in der Arbeitsstellung A in einer Seitenansicht dargestellt. Vorliegend weist der Kreiselschwader 10 in Querrichtung QR an der einen Seite eines Rahmens 12 einen ersten Kreiselrechen 14 mit einer Mittelachse M1 und auf der anderen Seite einen zweiten Kreiselrechen 16 mit einer Mittelachse M2 auf.

An den Kreiselrechen 14, 16 sind Rechzinken 18 angebracht, die in der annähernd horizontalen Arbeitsstellung der Kreiselrechen 14, 16 um die jeweiligen Mittelachsen M1, M2 angetrieben sind. Die Kreiselrechen 14, 16 sind um einen Mittelachsenabstand MM beabstandet zueinander angeordnet. Der Mittelachsenabstand MM beträgt zwischen dem einfachen und dem anderthalbfachen der Länge des Radius R des ersten Kreiselrechens 14.

Der Rahmen 12 weist in Fahrtrichtung F vorne eine vorliegend nicht näher beschriebene Kupplungsvorrichtung auf, die einen Anhängepunkt 20, zum Anhängen an eine landwirtschaftliche Zug- und Antriebsmaschine in der Art eines Traktors, aufweist. Heckseitig weist der Rahmen 12 ein Fahrwerk 22 mit Laufrädern 24 zur Abstützung auf einer Feld- oder Wiesenfläche auf. Unter den beiden Kreiselrechen 14, 16 ist eine Stütz- und Tastradanordnung 26 angeordnet, die für die richtige Arbeitshöhe der Rechzinken 18 sorgt. Während des Betriebs ergibt sich dadurch aufgrund von Bodenunebenheiten eine Änderung des vertikalen Abstands der Kreiselrechen 14, 16 zum Rahmen 12.

Der erste Kreiselrechen 14 ist über einen ersten Tragarm 28 und der zweite Kreiselrechen 16 ist über einen zweiten Tragarm 30 am Rahmen 12 angelenkt, wobei der erste Kreiselrechen 14 über eine erste Tragarmschwenkachse S1 und der zweite Kreiselrechen 16 über eine zweite Tragarmschwenkachse S2 schwenkbar am Rahmen 12 gelagert sind. Die Tragarmschwenkachsen S1, S2 erstrecken sich in Längsrichtung LR des Rahmens 12, d.h. sie sind im Wesentlichen parallel zum Rahmen 12 sowie parallel zum Boden angeordnet. In der Arbeitsstellung A sind der erste Kreiselrechen 14 und der zweite Kreiselrechen 16 im Wesentlichen bodenparallel ausgerichtet. Zur Überführung der jeweiligen Kreiselrechen 14, 16 aus der nahezu horizontalen Arbeitsstellung A in eine etwa vertikale Transportstellung und umgekehrt können die jeweiligen Tragarme 28, 30 beispielsweise mittels einer vorliegend nicht näher dargestellten, an den Tragarmen 28, 30 angeordneten hydraulischen Zylinderanordnung 31 hochgeschwenkt werden.

Die Tragarme 28, 30 sind vorliegend längenveränderbar ausgebildet, so dass mit dem Kreiselschwader 10 in vorteilhafter Weise eine große Arbeitsbreite erzielt werden kann. Aufgrund der längenveränderlichen Tragarme können der erste Kreiselrechen 14 sowie der zweite Kreiselrechen 16 in Querrichtung QR des Rahmens 12 unterschiedlich positioniert werden, wodurch die Schwadablage verändert werden kann. Diese kann dann beidseitig, als Mittenschwad oder als einseitiger Seitenschwad erfolgen.

In der vorliegend nicht dargestellten Transportstellung werden die Tragarme 28, 30 regelmäßig in der kürzesten Konfiguration eingestellt.

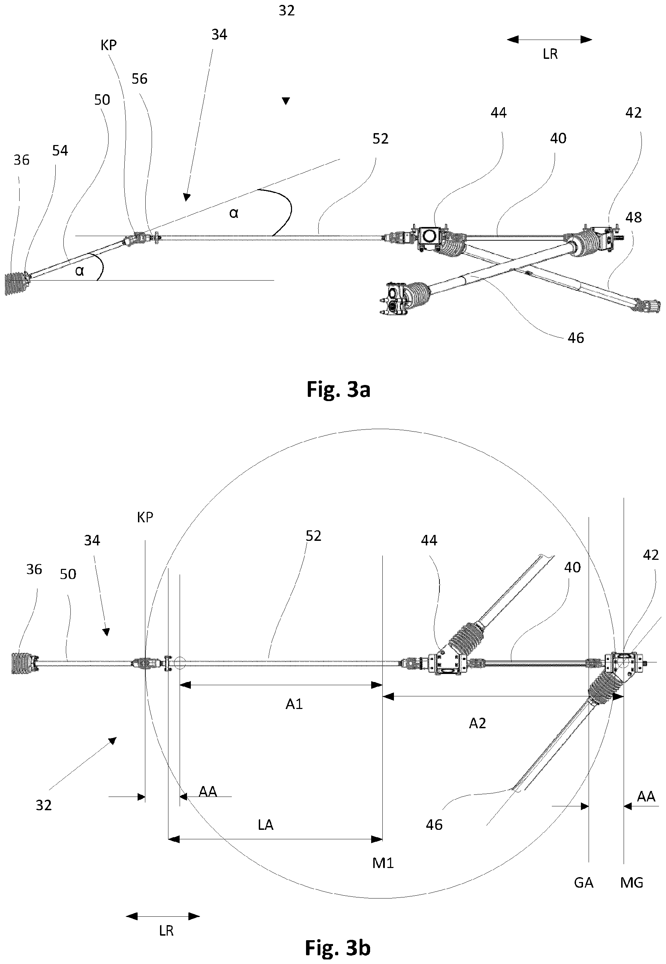

Die Kreiselrechen 14, 16 stehen mit einem Antriebsstrang 32 in Wirkverbindung. Der Verlauf des Antriebsstrangs 32 ist mit einer strichpunktierten Linie angedeutet und ist in Fig. 3a und Fig. 3b näher beschrieben. Der Anbindungsstrang 32 weist eine Anbindungsgelenkwellenanordnung 34 auf, die antriebseitig über einen Zapfwellen-Anbindungspunkt 36 mit einer Antriebsgelenkwelle 38 verbunden ist, wobei die Antriebsgelenkwelle 38 mit der Zug- und Antriebsmaschine verbindbar ist und im Betrieb insbesondere horizontal angeordnet ist.

Abtriebseitig ist die Anbindungsgelenkwellenanordnung 34 mit einem zweiten Verteilergetriebe 44 verbunden, das wiederum mit einer Verbindungsgelenkwelle 40 verbunden ist, die das zweite Verteilergetriebe 44 mit einem ersten Verteilergetriebe 42 verbindet. Die Verteilergetriebe 42, 44 sind in Vertikalrichtung oberhalb der Kreiselrechen 14, 16 am Rahmen 12 insbesondere auf der gleichen vertikalen Höhe angeordnet, wobei sie einen Höhenversatz HV zum Zapfwellen-Anbindungspunkt 36 aufweisen.

Das zweite Verteilergetriebe 44 ist über einen Horizontalabstand HA beabstandet zum Zapfwellen-Anbindungspunkt 36 angeordnet. Dadurch ergibt sich eine Mindeststeigung in der Anbindungsgelenkwellenanordnung 34, so dass diese eine Drehmomentübertragung unter wenigstens einem Mindest-Winkelversatz übertragen muss.

Der erste Kreiselrechen 14 ist über eine erste Kreiselgelenkwelle 46 mit dem ersten Verteilergetriebe 42 und der zweite Kreiselrechen 16 ist über eine zweite Kreiselgelenkwelle 48 mit dem zweiten Verteilergetriebe 44 verbunden. Die jeweiligen Kreiselgelenkwellen 46, 48 sind längenveränderlich ausgebildet, beispielsweise mittels sich überdeckenden Schiebeprofilen. Das ermöglicht, dass die Kreiselgelenkwellen 46, 48 eine Überführung der Kreiselrechen 14, 16 von der annähernd horizontalen Arbeitsstellung A bei ausgefahrenen Tragarmen 28, 30 in die nahezu vertikale Transportstellung bei eingefahrenen Tragarmen 28, 30 und umgekehrt mitmachen können. Ferner wird dadurch die Bodenanpassung der Kreiselrechen 14, 16 des Kreiselschwaders 10 verbessert.

Erfindungsgemäß ist das zweite Verteilergetriebe 44 in Längsrichtung LR des Rahmens 12 zwischen dem Anhängepunkt 20 und dem ersten Verteilergetriebe 42 angeordnet. In Längsrichtung LR des Rahmens 12 betrachtet kann das zweite Verteilergetriebe 44 als das vordere Verteilergetriebe, und das erste Verteilergetriebe 42 als das hintere Verteilergetriebe bezeichnet werden. Vorliegend sind die beiden Verteilergetriebe 42, 44 zwischen der Mittelachse M1 des ersten Kreiselrechens 14 und der Mittelachse M2 des zweiten Kreiselrechens 16 angeordnet. Alternativ ist es denkbar, dass das erste Verteilergetriebe 42 in Längsrichtung LR des Rahmens 12 hinter der Mittelachse M2 des zweiten Kreiselrechens 16 angeordnet ist.

Durch die erfindungsgemäße Anordnung des ersten Verteilergetriebes 42 in Fahrtrichtung F und Längsrichtung LR des Rahmens 12 hinter dem zweiten Verteilergetriebe 44 ist eine hohe Flexibilität der Anordnung der Verteilergetriebe 42, 44 am Rahmen 12 erzielt. Dadurch kann ein großer Abstand zwischen dem Anhängepunkt 20 und dem ihm in Längsrichtung LR des Rahmens 12 nächstliegenden, zweiten Verteilergetriebe 44 erzielt werden. Das führt in Längsrichtung LR des Rahmens 12 zu einer Entzerrung der Platzverhältnisse des frontseitigen Antriebsstrangs 32 zwischen dem Anhängepunkt 20 und dem vorderen bzw. zweiten Verteilergetriebe 44, so dass bei unveränderter Länge des Rahmens 12 die Anbindungsgelenkwellenanordnung 34 eine geringe Steigung aufweisen kann.

In Längsrichtung LR des Rahmens 12 betrachtet ist die erste Kreiselgelenkwelle 46 von dem ersten Verteilergetriebe 42 in einer Lage oberhalb und hinter dem ersten Kreiselrechen 14 an diesen herangeführt und die zweite Kreiselgelenkwelle 48 ist von dem zweiten Verteilergetriebe 44 in einer Lage oberhalb und vor dem zweiten Kreiselrechen 16 an diesen herangeführt, wobei die Kreiselgelenkwellen 46, 48 in horizontaler und vertikaler Ebene schräg zum Rahmen 12 verlaufen.

Eine Überführung der Kreiselrechen 14, 16 von der Arbeitsstellung A in die Transportstellung und umgekehrt geht mit einer Längenänderung der Kreiselgelenkwellen 46, 48 einher. In der Transportstellung weisen die Kreiselgelenkwellen 46, 48 eine Länge auf, bei der die teleskopierbaren Schiebeprofilteile nahezu vollständig ineinandergeschoben sind, wohingegen die Kreiselgelenkwellen 46, 48 insbesondere bei ausgefahrenen Tragarmen 28, 30 fast vollständig auseinandergezogen sind.

Aufgrund des spitzen Winkels β zwischen den Kreiselgelenkwellen 46, 48 und dem Rahmen 12 wird aufgrund der zur Verfügung stehenden Auszugslänge der Kreiselgelenkwellen 46, 48 ein Überführen der Kreiselrechen 14, 16 in die annähernd horizontale Arbeitsstellung ermöglicht.

Durch die erfindungsgemäße Anordnung der Verteilergetriebe 42, 44 wird trotz eines geringen Übertragungswinkels α der Anbindungsgelenkwellenanordnung 34 eine derart große Längenveränderung der Kreiselgelenkwellen 46, 48 ermöglicht, dass auch in Arbeitsstellung A bei maximal ausgefahrenen Tragarmen 28, 30, Höhenänderungen der jeweiligen Kreiselrechen 14, 16 aufgrund von Senken noch von den Kreiselgelenkwellen 46, 48 realisiert werden können. Dadurch können große Rechbreiten des Kreiselschwaders 10 mit guter Bodenanpassung ermöglicht werden, ohne dass die Kreiselgelenkwellen 46, 48 in Senken drohen auseinanderzufallen oder sich in der Transportstellung sperren.

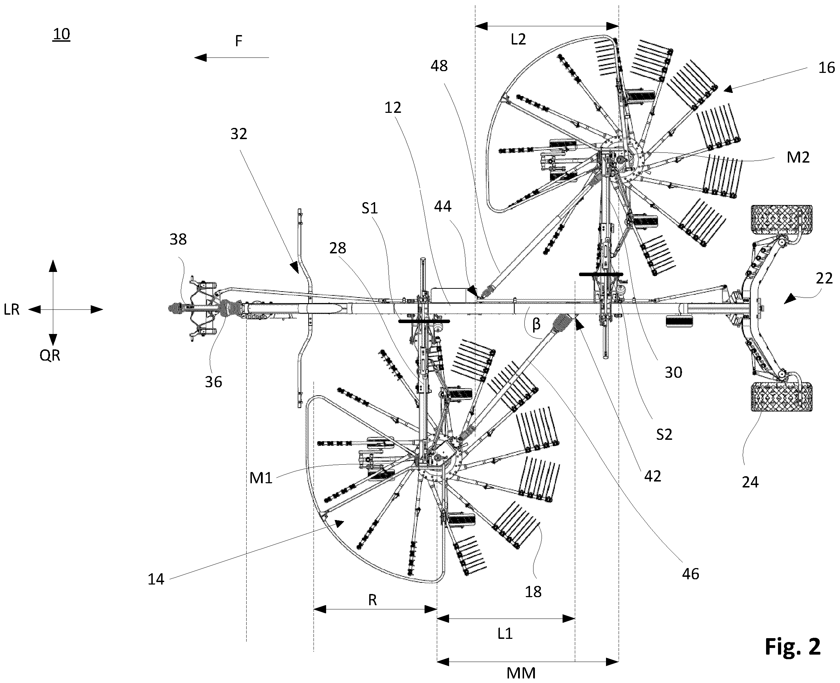

Fig. 2 zeigt den Kreiselschwader 10 in einer Ansicht von oben nach Fig. 1. In Querrichtung QR des Rahmens 12 sind beidseitig ein erster, vorderer Kreiselrechen 14 und ein zweiter, hinterer Kreiselrechen 16 angeordnet, die über einen Mittelachsenabstand MM, der zwischen 1x und 1,5x Radius R des ersten Kreiselrechens 14 beträgt, beabstandet zueinander angeordnet sind.

Der erste Kreiselrechen 14, der über den ersten Tragarm 28 am Rahmen angebunden ist, liegt vor dem zweiten Kreiselrechen 16, der über den zweiten Tragarm 30 schwenkbar am Rahmen 12 angelenkt ist. Die jeweiligen Tragarmschwenkachsen S1, S2 erstecken sich nahezu bodenparallel in Längsrichtung LR des Rahmens 12.

Vorliegend sind die beiden Kreiselrechen 14, 16 in der abgesenkten Arbeitsstellung A parallel zum Boden ausgerichtet. Durch die Schwenkbewegung der jeweiligen Tragarme 28, 30 können die Kreiselrechen 14, 16 in eine etwa vertikale Transportstellung hochgeschwenkt werden. Die Tragarme 28, 30 sind längenveränderbar ausgebildet, beispielsweise teleskopierbar und/oder mit zusätzlichen Schwenkachsen. Die Tragarme 28, 30 sind vorliegend in ihrem maximalen Auszug dargestellt. Die Kreiselgelenkwellen 46, 48 sind ebenfalls längenveränderlich ausgebildet.

Erfindungsgemäß ist das zweite, vordere Verteilergetriebe 44 in Längsrichtung LR des Rahmens 12 zwischen dem Anhängepunkt 20 und dem ersten, hinteren Verteilergetriebe 42 angeordnet. Das erste, hintere Verteilergetriebe 42 ist entsprechend mit dem ersten, vorderen Kreiselrechen 14 verbunden und das zweite, vordere Verteilergetriebe 44 mit dem zweiten, hinteren Kreiselrechen 16.

In Längsrichtung LR des Rahmens 12 betrachtet erstreckt sich die erste Kreiselgelenkwelle 46 vom ersten Verteilergetriebe 42 in einer schräg nach vorne und außen zeigenden Ausrichtung zum ersten Kreiselrechen 14 und die zweite Kreiselgelenkwelle 48 erstreckt sich vom zweiten Verteilergetriebe 44 in einer schräg nach hinten und außen zeigenden Ausrichtung zum zweiten Kreiselrechen 16.

Dabei schließen die Kreiselgelenkwellen 46, 48 und der Rahmen 12 insbesondere in horizontaler Ebene einen spitzen Winkel β ein, der aufgrund des großen Abstands zwischen den Verteilergetrieben 42, 44 und den jeweils mit ihnen verbundenen Kreiselrechen 14, 16 gering ausfällt.

Die erfindungsgemäße Anordnung des ersten Verteilergetriebes 42 in Fahrtrichtung F und Längsrichtung LR des Rahmens 12 hinter dem zweiten Verteilergetriebe 44 ermöglicht eine hohe Flexibilität der Anordnung der Verteilergetriebe 42, 44 am Rahmen 12, wodurch ein großer Abstand L1 zwischen der Mittelachse M1 des Kreiselrechens 14 und dem ersten Verteilergetriebe 42 realisiert werden kann. Analog ergibt sich der Abstand L2 zwischen der Mittelachse M2 des zweiten Kreiselrechens 16 und dem zweiten Verteilergetriebe 44. Die Abstände L1 und L2 betragen bevorzugt zwischen 100% bis 150% des Radius R des Kreiselrechens 14, 16. Je größer der Abstand L1, L2 ist, desto geringer ist die relative Winkelbewegung und die relative Auszugslänge der Kreiselgelenkwellen 46, 48 während des Betriebs.

Daraus folgt, dass eine Höhenänderung der Kreiselrechen 14, 16, beispielsweise aufgrund von Bodenunebenheiten im Betrieb, mit einer entsprechend geringen Längenveränderung der Kreiselgelenkwellen 46, 48 einhergeht. Auch die Überführung von der Arbeitsstellung A in die Transportstellung und umgekehrt geht mit einer geringen Längenveränderung der Kreiselgelenkwellen 46, 48 einher.

Die erfindungsgemäße Anordnung der Verteilergetriebe 42, 44 ermöglicht in vorteilhafter Weise die Kreiselgelenkwellen 46, 48 mit einem wesentlich größeren Auszugsweg auszubilden, da die Länge der Kreiselgelenkwellen 46, 48 und damit auch der realisierbare Auszugsweg mit zunehmender Länge L1, L2 zunimmt.

Zudem wird auf diese Weise ein großer Abstand zwischen dem vorliegend nicht dargestellten Anhängepunkt 20 und dem ihm in Längsrichtung LR des Rahmens 12 nächstliegenden, vorderen, zweiten Verteilergetriebe 44 sowie zwischen dem Anhängepunkt 20 und dem hinteren, ersten Verteilergetriebe 42 erzielt.

Dadurch sind in Längsrichtung LR des Rahmens 12 die Platzverhältnisse des frontseitigen Antriebsstrangs 32 zwischen dem Anhängepunkt 20 und dem vorderen Verteilergetriebe 44 entzerrt, wodurch die Anbindungsgelenkwellenanordnung 34 bei unveränderter Länge des Rahmens 12 eine möglichst geringe Steigung aufweist.

Fig. 3a zeigt eine Darstellung des Antriebsstrangs 32, über den die Kreiselrechen 14, 16 angetrieben werden.

Der Antriebsstrang 32 weist einen Zapfwellen-Anbindungspunkt 36 auf, über den eine insbesondere im Betrieb im Wesentlichen horizontal liegende Antriebsgelenkwelle 38 verbunden werden kann, die vorliegend nicht dargestellt ist. Der Antriebsstrang 32 umfasst die vorliegend zweiteilig ausgebildete Anbindungsgelenkwellenanordnung 34, die über das zweite Verteilergetriebe 44 mit der Verbindungsgelenkwelle 40 verbunden ist, die ihrerseits das erste Verteilergetriebe 42 antreibt. Das erste Verteilergetriebe 42 ist mit der ersten Kreiselgelenkwelle 46 zum Antrieb des ersten Kreiselrechens 14 und das zweite Verteilergetriebe 44 mit der zweiten Kreiselgelenkwelle 48 zum Antrieb des zweiten Kreiselrechens 16 verbunden.

Die Anbindungsgelenkwellenanordnung 34 umfasst ein erstes Gelenkwellenteil 50 und ein zweites Gelenkwellenteil 52, wobei das erste Gelenkwellenteil 50 einen Übertragungswinkel a mit der Horizontalen und dem parallel zur Horizontalen liegenden zweiten Gelenkwellenteil 52 einschließt. Dadurch ergeben sich wenigstens bei der Geradeausfahrt bei einer horizontal liegenden Antriebsgelenkwelle 38 keine Unterschiede der Drehgeschwindigkeit.

Vorliegend ist das erste Gelenkwellenteil 50 über einen ersten Lagerpunkt 54 und das zweite Gelenkwellenteil 52 über einen zweiten Lagerpunkt 56 am Rahmen 12 gelagert. Der zweite Lagerpunkt 56 ist in Längsrichtung LR des Rahmens 12 über einen Lagerabstand LA zur Mittelachse M1 des ersten Kreiselrechens 14 angeordnet, wobei der Lagerabstand LA annähernd der Länge des Radius R des ersten Kreiselrechens 14 entspricht, wie aus Fig. 1 und Fig. 2 gut zu erkennen ist. So kann das erste Gelenkwellenteil 50 eine Durchgangshöhe D des ersten Kreiselrechens 14 unter dem Rahmen 12 mittels einer Steigung schnell überwinden.

Fig. 3b zeigt eine Draufsicht auf den Antriebsstrang 32 nach Fig. 3a. Die Anbindungsgelenkwellenanordnung 34 weist eine zweiteilige Anordnung auf, wobei ein erstes Gelenkwellenteil 50 den Zapfwellen-Anbindungspunkt 36 bildet und ein mit dem ersten Gelenkwellenteil 50 verbundenes zweites Gelenkwellenteil 52 umfasst, das mit dem zweiten Verteilergetriebe 44 verbunden ist.

Die Verteilergetriebe 42, 44 besitzen jeweils einen Anschlussabstand AA. Am ersten Verteilergetriebe 42 ist der Abstand AA zwischen der Gelenkachse GA des Getriebeeingangs und der Mitte MG des Verteilergetriebes 42 definiert. Die Mitte MG des Verteilergetriebes 42 liegt in etwa im Schnittpunkt der Getriebeeingangs-Mittelachse und der Mittelachse des Getriebeausgangs, an dem die Kreiselgelenkwelle 46 angebunden ist.

Erfindungsgemäß ist in Längsrichtung LR gesehen der Abstand A1 des Knickpunkts KP von der Mittelachse M1 des vorderen Kreiselrechens 14 abzüglich des Anschlussabstands AA des ersten Verteilergetriebes 42 geringer als der Abstand A2 der Getriebemitte MG des ersten Verteilergetriebes 42 von der Mittelachse M1 des ersten Kreiselrechens 14.

Dadurch liegt bei gleichem Übertragungswinkel α ein größerer Abstand, nämlich der Abstand A2, zwischen der Mitte MG des Verteilergetriebes 42 und der Mittelachse M1 des ersten Kreiselrechens 14 vor, als dies der Fall wäre, wenn das Verteilergetriebe 42 unmittelbar an das erste Gelenkwellenteil 50 im Knickpunkt KP anschließen würde.

So kann bei der erfindungsgemäßen Anordnung gegenüber der bekannten Anordnung, bei der das erste Verteilergetriebe 42 in Längsrichtung des Rahmens 12 vor dem zweiten Verteilergetriebe 44 liegt, entweder bei gleichem Abstand zwischen der Mitte MG des Verteilergetriebes 42 und der Kreiselachse M1 ein geringerer Übertragungswinkel α realisiert werden und damit der Verschleiß reduziert werden, oder bei gleichem Übertragungswinkel α ein größerer Abstand erzielt werden, was zu einer Verbesserung im Hinblick auf den Längenausgleich der Kreiselgelenkwellen 46, 48 führt.

### Bezugszeichenliste

- 10: Kreiselschwader
- 12: Rahmen
- 14: erster Kreiselrechen
- 16: zweiter Kreiselrechen
- 18: Rechzinken
- 20: Anhängepunkt
- 22: Fahrwerk
- 24: Laufrad
- 26: Stütz- und Tastradanordnung
- 28: erster Tragarm
- 30: zweiter Tragarm
- 31: Zylinderanordnung
- 32: Antriebsstrang
- 34: Anbindungsgelenkwellenanordnung
- 36: Zapfwellen-Anbindungspunkt
- 38: Antriebsgelenkwelle
- 40: Verbindungsgelenkwelle
- 42: erstes Verteilergetriebe
- 44: zweites Verteilergetriebe
- 46: erste Kreiselgelenkwelle
- 48: zweite Kreiselgelenkwelle
- 50: erstes Gelenkwellenteil
- 52: zweites Gelenkwellenteil
- 54: erster Lagerpunkt
- 56: zweiter Lagerpunkt

- A: Arbeitsstellung
- AA: Anschlussabstand
- A1: Abstand M1 zu (KP-AA)
- A2: Abstand M1 zu MG
- D: Durchgangshöhe
- F: Fahrtrichtung
- HA: Horizontalabstand
- HV: Höhenversatz
- KP: Knickpunkt
- L1: Abstand (Mittelachse erster Kreiselrechen - erste Verteilergetriebe)
- L2: Abstand (Mittelachse zweiter Kreiselrechen - zweiter Verteilergetriebe)
- LA: Abstand (zweiter Lagerpunkt - Mittelachse erster Kreiselrechen)
- LR: Längsrichtung
- M1: Mittelachse des ersten Kreiselrechens
- M2: Mittelachse des zweiten Kreiselrechens
- QR: Querrichtung
- R: Radius des ersten Kreiselrechen
- S1: Schwenkachse des ersten Tragarms
- S2: Schwenkachse des zweiten Tragarms
- a: Übertragungswinkel
- β: horizontaler Winkel

## Patentansprüche

1. Kreiselschwader (10), umfassend einen sich in Fahrtrichtung (FR) erstreckenden Rahmen (12), der frontseitig über einen Anhängepunkt (20) mit einer landwirtschaftlichen Zug- und Antriebsmaschine koppelbar ist und ein Fahrwerk (22) zur Abstützung auf dem Boden aufweist, wobei ein erster Kreiselrechen (14) und ein zweiter Kreiselrechen (16) in Querrichtung (QR) beidseitig am Rahmen (12) angeordnet sind, wobei eine Mittelachse (M1) des ersten Kreiselrechens (14) in Längsrichtung (LR) des Rahmens (12) zwischen dem Anhängepunkt (20) und einer Mittelachse (M2) des zweiten Kreiselrechens (16) angeordnet ist, wobei der erste Kreiselrechen (14) über einen ersten Tragarm (28) und der zweite Kreiselrechen (16) über einen zweiten Tragarm (30), die jeweils schwenkbar um eine Tragarmschwenkachse (S1, S2) am Rahmen (12) gelagert sind, wobei zum Antreiben der Kreiselrechen (14, 16) diese jeweils mit einem Antriebsstrang (32) in Wirkverbindung stehen, der über einen Zapfwellen-Anbindungspunkt (36) mittels einer Antriebsgelenkwelle (38) mit einem Abtrieb der Zug- und Antriebsmaschine verbindbar ist, wobei der Antriebsstrang (32) eine Verbindungsgelenkwelle (40) aufweist, die ein erstes Verteilergetriebe (42) mit einem zweiten Verteilergetriebe (44) verbindet, die oberhalb der Kreiselrechen (14, 16) am Rahmen (12) angebracht sind, und wobei das erste Verteilergetriebe (42) über eine erste Kreiselgelenkwelle (32) mit dem ersten Kreiselrechen (18) verbunden ist und das zweite Verteilergetriebe (44) über eine zweite Kreiselgelenkwelle (36) mit dem zweiten Kreiselrechen (20) verbunden ist, **dadurch gekennzeichnet, dass** das zweite Verteilergetriebe (44) in Längsrichtung (LR) des Rahmens (12) zwischen dem Anhängepunkt (20) und dem ersten Verteilergetriebe (42) angeordnet ist und der Zapfwellen-Anbindungspunkt (36) über eine Anbindungsgelenkwellenanordnung (34) mit dem zweiten Verteilergetriebe (44) verbunden ist.

2. Kreiselschwader nach Anspruch 1, **dadurch gekennzeichnet, dass** der erste Tragarm (28) sowie der zweite Tragarm (30) längenveränderlich ausgebildet sind.

3. Kreiselschwader nach einem der vorangehenden Ansprüche 1 bis 2, **dadurch gekennzeichnet, dass** sich die Tragarmschwenkachsen (S1, S2) horizontal in Längsrichtung (LR) des Rahmens (12) erstrecken.

4. Kreiselschwader nach einem der vorangehenden Ansprüche 1 bis 3, **dadurch gekennzeichnet, dass** der Zapfwellen-Anbindungspunkt (36) in Längsrichtung (LR) des Rahmens (12) hinter dem Anhängepunkt (20) liegt und horizontal beabstandet zum nächstliegenden Verteilergetriebe (44) angeordnet ist, wobei der Horizontalabstand (HA) größer ist als der Radius (R) des ersten Kreiselrechens (14), und ferner der Zapfwellen-Anbindungspunkt (36) in vertikaler Richtung über dem Anhängepunkt (20) angeordnet ist und einen Höhenversatz (HV) zum nächstliegenden Verteilergetriebe (44) aufweist, wodurch eine Steigung eingestellt ist.

5. Kreiselschwader nach einem der Ansprüche 1 bis 4, **dadurch gekennzeichnet, dass** das zweite Verteilergetriebe (44) in Längsrichtung (LR) des Rahmens (12) zwischen den Mittelachsen (M1, M2) des ersten Kreiselrechens (14) und des zweiten Kreiselrechens (16) angeordnet ist.

6. Kreiselschwader nach Anspruch 5, **dadurch gekennzeichnet, dass** das erste Verteilergetriebe (42) in Längsrichtung (LR) des Rahmens (12) zwischen den Mittelachsen (M1, M2) des ersten Kreiselrechens (14) und des zweiten Kreiselrechens (16) angeordnet ist.

7. Kreiselschwader nach einem der Ansprüche 5 oder 6, **dadurch gekennzeichnet, dass** die jeweiligen Mittelachsen (M1, M2) über eine Ausdehnung, die 1-mal bis 1,5-mal die Länge des Radius (R) des ersten Kreiselrechens (14) beträgt, beabstandet zueinander angeordnet sind.

8. Kreiselschwader nach einem der Ansprüche 5 bis 7, **dadurch gekennzeichnet, dass** das erste Verteilergetriebe (42) sowie das zweite Verteilergetriebe (44) jeweils mit einer Ausdehnung, die 50% bis 75% des Außendurchmessers des ersten Kreiselrechens (14) beträgt, beabstandet zur Mittelachse (M1, M2) der jeweils mit ihnen in Wirkverbindung stehenden Kreiselrechen (14, 16) angeordnet sind.

9. Kreiselschwader nach einem der Ansprüche 1 bis 8, **dadurch gekennzeichnet, dass** der Zapfwellen-Anbindungspunkt (36) unmittelbar über eine Anbindungsgelenkwellenanordnung (34) mit dem zweiten Verteilergetriebe (44) verbunden ist.

10. Kreiselschwader nach Anspruch 9, **dadurch gekennzeichnet, dass** die Anbindungsgelenkwellenanordnung (34) einteilig ausgebildet ist.

11. Kreiselschwader nach Anspruch 10, **dadurch gekennzeichnet, dass** die Anbindungsgelenkwellenanordnung (34) zweiteilig ausgebildet ist, wobei ein erstes Gelenkwellenteil (50) mit dem Zapfenwellen-Anbindungspunkt (36) und ein zweites Gelenkwellenteil (52) mit dem zweiten Verteilergetriebe (44) verbunden sind, wobei das erste Gelenkwellenteil (50) und das zweite Gelenkwellenteil (52) einen Winkel einschließen, der insbesondere weniger als 23°, insbesondere 20° beträgt.

12. Kreiselschwader nach Anspruch 11, **dadurch gekennzeichnet, dass** das erste Gelenkwellenteil (50) über einen ersten Lagerpunkt (54) am Rahmen (12) gelagert ist und / oder dass das zweite Gelenkwellenteil (52) zwischen dem Zapfenwellen-Anbindungspunkt (36) und der Mittelachse (M1) des ersten Kreiselrechens (14) über einen zweiten Lagerpunkt (56) am Rahmen (12) gelagert ist.

13. Kreiselschwader nach einem der Ansprüche 11 bis 12, **dadurch gekennzeichnet, dass** das erste Gelenkwellenteil (50) und das zweite Gelenkwellenteil (52) über einen Knickpunkt (KP) verbunden sind, wobei das erste Verteilergetriebe (42) einen Anschlussabstand (AA) besitzt, der durch die Distanz von der Gelenkachse (GA) des Getriebeeingangs und der Mitte (MG) des Verteilergetriebes (42) definiert ist, in Längsrichtung (LR) gesehen, der Abstand (A1) des Knickpunkts (KP) von der Mittelachse (M1) des vorderen Kreiselrechens (14) abzüglich des Anschlussabstands (AA) des ersten Verteilergetriebes (42) geringer ist als der Abstand (A2) der Getriebemitte (MG) des ersten Verteilergetriebes (42) von der Mittelachse (M1) des ersten Kreiselrechens (14).

14. Kreiselschwader nach einem der Ansprüche 1 bis 13, **dadurch gekennzeichnet, dass** der erste Kreiselrechen (14) und der zweite Kreiselrechen (16) gegenläufig angetrieben sind, wobei der zweite Kreiselrechen (16) insbesondere ein Getriebe aufweist.

15. Kreiselschwader nach einem der Ansprüche 1 bis 14, **dadurch gekennzeichnet, dass** der erste Kreiselrechen (14) und der zweite Kreiselrechen (16) gleichläufig angetrieben sind.

## Claims

1. Rotary rake (10) comprising a frame (12) extending in the direction of travel (FR), which can be coupled via an attachment point (20) at the front to an agricultural traction and driving machine and has a chassis (22) for supporting it on the ground, with a first rotary rake (14) and a second rotary rake (16) being arranged on either side of the frame (12) in the transverse direction (QR), wherein a central axis (M1) of the first rotary rake (14) is arranged, in the longitudinal direction (LR) of the frame (12), between the attachment point (20) and a central axis (M2) of the second rotary rake (16), wherein the first rotary rake (14) via a first support arm (28) and the second rotary rake (16) via a second support arm (30), with each arm being pivotable about a respective support arm pivot axis (S1, S2), are mounted on the frame (12), wherein the rotary rakes (14, 16) are each operatively connected to a drivetrain (32) for driving the rotary rakes (14, 16), which drivetrain (32) is adapted to be connected via a power take-off (PTO) connection point (36) to an output of the traction and driving machine by means of a driving cardan shaft (38), which drivetrain (32) has a connecting cardan shaft (40) which connects a first transfer gearbox (42) to a second transfer gearbox (44), which are mounted on the frame (12) at a location above the rotary rakes (14, 16), and wherein the first transfer gearbox (42) is connected to the first rotary rake (18) via a first rotary rake cardan shaft (32) and the second transfer gearbox (44) is connected to the second rotary rake (20) via a second rotary rake cardan shaft (36), **characterized in that** the second transfer gearbox (44) is arranged in the longitudinal direction (LR) of the frame (12) between the attachment point (20) and the first transfer gearbox (42), and the PTO connection point (36) is connected to the second transfer gearbox (44) via a connecting cardan shaft arrangement (34).

2. Rotary rake according to claim 1, **characterized in that** the first support arm (28) and the second support arm (30) are designed to be variable in length.

3. Rotary rake according to any one of claims 1 to 2 above, **characterized in that** the support arm pivot axes (S1, S2) extend horizontally in the longitudinal direction (LR) of the frame (12).

4. Rotary rake according to any one of claims 1 to 3 above, **characterized in that** the PTO connection point (36) is located behind the attachment point (20) in the longitudinal direction (LR) of the frame (12) and is arranged at a horizontal distance from the nearest transfer gearbox (44), wherein the horizontal distance (HA) is greater than the radius (R) of the first rotary rake (14), and furthermore the PTO connection point (36) is arranged in the vertical direction above the attachment point (20) and has a height offset (HV) with respect to the nearest transfer gearbox (44), thus setting a slope.

5. Rotary rake according to any one of claims 1 to 4 above, **characterized in that** the second transfer gearbox (44) is arranged between the central axes (M1, M2) of the first rotary rake (14) and the second rotary rake (16) in the longitudinal direction (LR) of the frame (12).

6. Rotary rake according to claim 5, **characterized in that** the first transfer gearbox (42) is arranged between the central axes (M1, M2) of the first rotary rake (14) and the second rotary rake (16) in the longitudinal direction (LR) of the frame (12).

7. Rotary rake according to any one of claims 5 or 6 above, **characterized in that** the respective central axes (M1, M2) are arranged space apart from one another to an extent which is 1 to 1.5 times the length of the radius (R) of the first rotary rake (14).

8. Rotary rake according to any one of claims 5 to 7 above, **characterized in that** the first transfer gearbox (42) and the second transfer gearbox (44) are each arranged spaced from the central axis (M1, M2) of the rotary rakes (14, 16), which are operatively connected to them, to an extent which is 50% to 75% of the outer diameter of the first rotary rake (14).

9. Rotary rake according to any one of claims 1 to 8 above, **characterized in that** the PTO connection point (36) is connected directly to the second transfer gearbox (44) via a connecting cardan shaft arrangement (34).

10. Rotary rake according to claim 9, **characterized in that** the connecting cardan shaft arrangement (34) is designed in one part.

11. Rotary rake according to claim 10, **characterized in that** the connecting cardan shaft arrangement (34) is designed in two parts, with a first connecting cardan shaft part (50) being connected to the PTO shaft connection point (36) and a second connecting cardan shaft part (52) being connected to the second transfer gearbox (44), with the first connecting cardan shaft part (50) and the second connecting cardan shaft part (52) forming an angle which is in particular less than 23°, and in particular is 20°.

12. Rotary rake according to claim 11, **characterized in that** the first connecting cardan shaft part (50) is mounted on the frame (12) via a first bearing point (54) and/or the second connecting cardan shaft part (52) is mounted on the frame (12) between the PTO shaft connection point (36) and the central axis (M1) of the first rotary rake (14) via a second bearing point (56).

13. Rotary rake according to any one of claims 11 to 12 above, **characterized in that** the first cardan shaft part (50) and the second cardan shaft part (52) are connected via a bend point (KP), with the first transfer gearbox (42) having a connection distance (AA) which is defined by the distance from the joint axis (GA) of the gearbox input and the center (MG) of the transfer gearbox (42), viewed in the longitudinal direction (LR), with the distance (A1) of the bend point (KP) from the central axis (M1) of the front rotary rake (14) minus the connection distance (AA) of the first transfer case (42) being less than the distance (A2) of the gearbox center (MG) of the first transfer gearbox (42) from the central axis (M1) of the first rotary rake (14).

14. Rotary rake according to any one of claims 1 to 13 above, **characterized in that** the first rotary rake (14) and the second rotary rake (16) are driven to rotate in opposite directions, with the second rotary rake (16) in particular having a gearbox.

15. Rotary rake according to any one of claims 1 to 14 above, **characterized in that** the first rotary rake (14) and the second rotary rake (16) are driven to rotate in the same direction.

## Revendications

1. Andaineuse rotative (10), comprenant un cadre (12) s'étendant dans le sens de la marche (FR), qui peut être accouplé sur le côté avant à une machine de traction et d'entraînement agricole par l'intermédiaire d'un point d'attelage (20) et présente un châssis (22) destiné à être en appui sur le sol, dans laquelle un premier râteau rotatif (14) et un deuxième râteau rotatif (16) sont disposés des deux côtés sur le cadre (12) dans la direction transversale (QR), dans laquelle un axe médian (M1) du premier râteau rotatif (14) est disposé dans la direction longitudinale (LR) du cadre (12) entre le point d'attelage (20) et un axe médian (M2) du deuxième râteau rotatif (16), dans laquelle le premier râteau rotatif (14) par l'intermédiaire d'un premier bras de support (28) et le deuxième râteau rotatif (16) par l'intermédiaire d'un deuxième bras de support (30), qui sont montés sur le cadre (12) respectivement de manière à pouvoir pivoter autour d'un axe de pivotement de bras de support (S1, S2), dans laquelle pour l'entraînement des râteaux rotatifs (14, 16) ceux-ci sont respectivement en liaison fonctionnelle avec une chaîne cinématique (32), qui peut être reliée à une sortie de la machine de traction et d'entraînement au moyen d'un arbre à cardan d'entraînement (38) par l'intermédiaire d'un point de raccordement de prise de force (36), dans laquelle la chaîne cinématique (32) présente un arbre à cardan de liaison (40), qui relie une première boîte de transfert (42) à une deuxième boîte de transfert (44), qui sont placées sur le cadre (12) au-dessus des râteaux rotatifs (14, 16), et dans laquelle la première boîte de transfert (42) est reliée au premier râteau rotatif (18) par l'intermédiaire d'un premier arbre à cardan rotatif (32) et la deuxième boîte de transfert (44) est reliée au deuxième râteau rotatif (20) par l'intermédiaire d'un deuxième arbre à cardan rotatif (36), **caractérisée en ce que** la deuxième boîte de transfert (44) est disposée dans la direction longitudinale (LR) du cadre (12) entre le point d'attelage (20) et la première boîte de transfert (42) et le point de raccordement de prise de force (36) est relié à la deuxième boîte de transfert (44) par l'intermédiaire d'un ensemble d'arbre à cardan de raccordement (34).

2. Andaineuse rotative selon la revendication 1, **caractérisée en ce que** le premier bras de support (28) ainsi que le deuxième bras de support (30) sont réalisés de manière réglable en longueur.

3. Andaineuse rotative selon l'une quelconque des revendications précédentes 1 à 2, **caractérisée en ce que** les axes de pivotement de bras de support (S1, S2) s'étendent horizontalement dans la direction longitudinale (LR) du cadre (12).

4. Andaineuse rotative selon l'une quelconque des revendications précédentes 1 à 3, **caractérisée en ce que** le point de raccordement de prise de force (36) dans la direction longitudinale (LR) du cadre (12) se situe derrière le point d'attelage (20) et est disposé de manière espacée horizontalement de la boîte de transfert (44) la plus proche, dans laquelle l'écart horizontal (HA) est plus grand que le rayon (R) du premier râteau rotatif (14), et en outre le point de raccordement de prise de force (36) est disposé dans la direction verticale au-dessus du point d'attelage (20) et présente un décalage en hauteur (HV) par rapport à la boîte de transfert (44) la plus proche, ce qui a pour effet qu'une pente apparaît.

5. Andaineuse rotative selon l'une quelconque des revendications 1 à 4, **caractérisée en ce que** la deuxième boîte de transfert (44) dans la direction longitudinale (LR) du cadre (12) est disposée entre les axes médians (M1, M2) du premier râteau rotatif (14) et du deuxième râteau rotatif (16).

6. Andaineuse rotative selon la revendication 5, **caractérisée en ce que** la première boîte de transfert (42) dans la direction longitudinale (LR) du cadre (12) est disposée entre les axes médians (M1, M2) du premier râteau rotatif (14) et du deuxième râteau rotatif (16).

7. Andaineuse rotative selon l'une quelconque des revendications 5 ou 6, **caractérisée en ce que** les axes médians (M1, M2) respectifs sont disposés de manière espacée les uns des autres sur une étendue qui est égale à 1 fois à 1,5 fois la longueur du rayon (R) du premier râteau rotatif (14).

8. Andaineuse rotative selon l'une quelconque des revendications 5 à 7, **caractérisée en ce que** la première boîte de transfert (42) ainsi que la deuxième boîte de transfert (44) sont disposées de manière espacée de l'axe médian (M1, M2) des râteaux rotatifs (14, 16) respectivement en liaison fonctionnelle avec ceux-ci, respectivement avec une étendue qui est égale à 50 % à 75 % du diamètre extérieur du premier râteau rotatif (14).

9. Andaineuse rotative selon l'une quelconque des revendications 1 à 8, **caractérisée en ce que** le point de raccordement de prise de force (36) est relié à la deuxième boîte de transfert (44) directement par l'intermédiaire d'un ensemble d'arbre à cardan de raccordement (34).

10. Andaineuse rotative selon la revendication 9, **caractérisée en ce que** l'ensemble d'arbre à cardan de raccordement (34) est réalisé d'une seule pièce.

11. Andaineuse rotative selon la revendication 10, **caractérisée en ce que** l'ensemble d'arbre à cardan de raccordement (34) est réalisé en deux parties, dans laquelle une première partie d'arbre à cardan (50) est reliée au point de raccordement de prise de force (36) et une deuxième partie d'arbre à cardan (52) à la deuxième boîte de transfert (44), dans laquelle la première partie d'arbre à cardan (50) et la deuxième partie d'arbre à cardan (52) forment un angle qui est en particulier inférieur à 23°, en particulier égal à 20°.

12. Andaineuse rotative selon la revendication 11, **caractérisée en ce que** la première partie d'arbre à cardan (50) est montée sur le cadre (12) par l'intermédiaire d'un premier point d'appui (54) et/ou que la deuxième partie d'arbre à cardan (52) est montée sur le cadre (12) entre le point de raccordement de prise de force (36) et l'axe médian (M1) du premier râteau rotatif (14) par l'intermédiaire d'un deuxième point d'appui (56).

13. Andaineuse rotative selon l'une quelconque des revendications 11 à 12, **caractérisée en ce que** la première partie d'arbre à cardan (50) et la deuxième partie d'arbre à cardan (52) sont reliées par l'intermédiaire d'un point de flexion (KP), dans laquelle la première boîte de transfert (42) possède un écart de connexion (AA), qui est défini par la distance par rapport à l'axe d'articulation (GA) de l'entrée de boîte et le centre (MG) de la boîte de transfert (42), vu dans la direction longitudinale (LR), l'écart (A1) du point de flexion (KP) par rapport à l'axe médian (M1) du râteau rotatif (14) avant moins l'écart de connexion (AA) de la première boîte de transfert (42) est inférieur à l'écart (A2) du milieu de boîte (MG) de la première boîte de transfert (42) par rapport à l'axe médian (M1) du premier râteau rotatif (14).

14. Andaineuse rotative selon l'une quelconque des revendications 1 à 13, **caractérisée en ce que** le premier râteau rotatif (14) et le deuxième râteau rotatif (16) sont entraînés en sens contraire, dans laquelle le deuxième râteau rotatif (16) présente en particulier une boîte.

15. Andaineuse rotative selon l'une quelconque des revendications 1 à 14, **caractérisée en ce que** le premier râteau rotatif (14) et le deuxième râteau rotatif (16) sont entraînés dans le même sens.
